# EUROPÄISCHE PATENTSCHRIFT

(11) **EP 3 591 186 B1**
(45) Veröffentlichungstag und Bekanntmachung des Hinweises auf die Patenterteilung: **17.01.2024**
(21) Anmeldenummer: 19182698.1
(22) Anmeldetag: 26.06.2019
(51) Int. Cl.: F02B 37/22, F02B 37/24, F02D 41/00, F02M 26/06, F04D 25/04, F04D 27/02, F04D 29/42, F02D 41/02, F04D 25/02, F02B 37/12

(54) **VERFAHREN ZUM BETREIBEN EINER BRENNKRAFTMASCHINE MIT EINEM DEM VERDICHTER ZUGEORDNETEN TRIMMSTELLER**
METHOD FOR OPERATING A COMBUSTION ENGINE WITH A TRIM ADJUSTER ASSIGNED TO THE COMPRESSOR
PROCÉDÉ DE FONCTIONNEMENT D'UN MOTEUR À COMBUSTION INTERNE AVEC UN DISPOSITIF DE RÉGLAGE DE L'OUVERTURE DU COMPRESSEUR

(30) Priorität: 05.07.2018 DE 102018211095
(43) Veröffentlichungstag der Anmeldung: 08.01.2020
(73) Patentinhaber: Volkswagen AG, 38440 Wolfsburg (DE)
(72) Erfinder: Bartolome, Javier, 38102 Braunschweig (DE); Vahldiek, Manuel, 38102 Braunschweig (DE); Hagelstein, Dirk, 38110 Braunschweig (DE); Staats, Arne, 38518 Gifhorn (DE)

(56) Entgegenhaltungen:
- EP-A1- 3 176 440
- EP-A1- 3 543 538
- WO-A1-2013/074503
- DE-A1-102015 209 704
- DE-A1-102017 005 412
- DE-B3-102012 011 423

## Beschreibung

Die Erfindung betrifft ein Verfahren zum Betreiben eines Kraftfahrzeugs mit einer Brennkraftmaschine und ein zur Durchführung eines solchen Verfahrens geeignetes Kraftfahrzeug.

In einem Verdichter einer Brennkraftmaschine für ein Kraftfahrzeug wird das über einen Frischgasstrang einem Verbrennungsmotor der Brennkraftmaschine zuzuführende Frischgas verdichtet. Dabei ist die Anhebung des Drucks des Frischgases von der Drehzahl des Verdichterlaufrads sowie von dem Massenstrom des über das Verdichterlaufrad geführten Frischgases abhängig. In Richtung der sogenannten Pumpgrenze des Verdichterkennfelds erfolgt die Anströmung der Eintrittskanten der Laufradschaufeln infolge der gegenüber der Umfangsgeschwindigkeit abnehmenden Anströmgeschwindigkeit zunehmend druckseitig, d.h. die Inzidenz der Anströmung nimmt stetig zu. Ab einem betriebspunktabhängigen Grenzwert der Inzidenz, der sogenannten Pumpgrenze, löst die Strömung an den Eintrittskanten ab und die Strömung im Verdichter wird instabil. Im Bereich der Pumpgrenze bildet sich an der einlassseitigen Gehäusekontur des Verdichters ein Rückströmgebiet impulsarmen Fluids aus. Diese sogenannte Rückströmblase führt durch Drall- und Mischungsverluste zu einem Abfall des Verdichterwirkungsgrads. Im Bereich der Nabenkontur des Laufrads verläuft aber auch nahe der Pumpgrenze eine impulsreiche und verlustarme Kernströmung durch den Verdichter, die den Massendurchsatz und den Druckaufbau bestimmt.

Ein Trimmsteller, wie er beispielsweise aus der DE 10 2010 026 176 A1, der EP 3 018 355 A1, der DE 10 2015 209 704 A1, der DE 10 2014 225 716 A1, der nachveröffentlichten EP 3 543 538 A1 oder der WO 2014/131790 A1 bekannt ist, dient der Verschiebung der Pumpgrenze eines Verdichterkennfelds in Richtung relativ niedriger Massenströme bei relativ hohen Druckverhältnissen. Gleichzeitig kann ein Trimmsteller im Bereich der Pumpgrenze einen Anstieg des Verdichterwirkungsgrads bewirken. Hierzu umfasst ein Trimmsteller eine Vorrichtung, durch die der Anströmquerschnitt, in dem das Laufrad des Verdichters angeströmt wird, veränderbar ist. Durch die so erreichte Düsenwirkung des Trimmstellers kann mit zunehmendem Regeleingriff (Verkleinerung des Anströmquerschnitts) die Gasströmung stärker auf den nabennahen Eintrittsquerschnitt des Verdichterlaufrads fokussiert werden. Dadurch strömt weniger Gas in den impulsarmen und verlustbehafteten Bereich der Rückströmblase und die Kernströmung im nabennahen Bereich wird beschleunigt und dadurch zusätzlich stabilisiert. Die Beschleunigung der Gasströmung im nabennahen Bereich des Verdichterlaufrads hat zusätzlich eine Verschiebung der Anströmung des Verdichterlaufrads zur Folge, was zu einer weiteren Stabilisierung der Gasströmung beitragen kann. Die Stabilisierung der Kernströmung führt zu der gewünschten Verschiebung der Pumpgrenze des Verdichterkennfelds zu geringeren Massenströmen. Bei nicht gewünschtem Regeleingriff (Trimmsteller vollständig geöffnet) wird möglichst der gesamte Querschnitt des Frischgasstrangs vor dem Verdichterlaufrad freigegeben, so dass in der dann vorliegenden Anströmung des Verdichterlaufrads möglichst keine zusätzlichen Reibungs- oder Drosselverluste entstehen. Der Verdichterwirkungsgrad und die Breite des Verdichterkennfelds werden deshalb in Richtung der Stopfgrenze nicht in einem relevanten Maße negativ durch einen Trimmsteller beeinflusst.

Als problematisch im Betrieb einer Brennkraftmaschine eines Kraftfahrzeugs kann sich eine häufig als "Kaudern" bezeichnete Geräuschentwicklung zeigen, die bei Schaltvorgängen, d.h. während eines Wechselns der Übersetzung, mit dem ein Schaltgetriebe, das zwischen dem Verbrennungsmotor der Brennkraftmaschine und den angetriebenen Rädern in den Antriebsstrang integriert ist, die Abtriebsdrehzahl des Verbrennungsmotors in die Antriebsdrehzahl der Räder ändert, auftritt. Ein solches Kaudern tritt insbesondere während eines Beschleunigungsbetriebs des Kraftfahrzeugs infolge der dann relativ hohen Last, mit der der Verbrennungsmotor betrieben wird, und den in einem Beschleunigungsbetrieb üblichen Schaltvorgängen auf. Die relativ hohe Last, mit der der Verbrennungsmotor betrieben wird, führt zu einem entsprechend hohen Verdichterdruckverhältnis (Verhältnis des Absolutdrucks auf der Hochdruckseite des Verdichter zu dem Absolutdruck auf der Niederdruckseite) bei gleichzeitig relativ hohem Massenstrom an Frischgas, das durch den Verdichter geführt wird. Bei einem relativ hohen Verdichterdruckverhältnis in Verbindung mit einem relativ hohen Frischgasmassenstrom wird der Verdichter grundsätzlich in einem ausreichenden Abstand von der Pumpgrenze betrieben. Während eines Schaltvorgangs kann sich jedoch der Frischgasmassenstrom temporär stark verringern, während das Verdichterdruckverhältnis weiter ansteigt, im Wesentlichen gleich bleibt oder sich zumindest nur relativ geringfügig verringert. Dies kann dazu führen, dass der Verdichter während des Schaltvorgangs temporär in der Nähe der Pumpgrenze betrieben wird. Dies kann zu der Ausbildung der bereits beschriebenen Rückströmblase führen, die sich wellenförmig in den stromauf des Verdichterlaufrads liegenden Abschnitt Frischgasstrangs ausbreitet, was zu einer entsprechenden Schwingungsanregung der dortigen Komponenten des Frischgasstrangs führen kann. Diese Schwingungsanregung führt zu der als Kaudern bezeichnete Geräuschentwicklung.

Die WO 2004/022956 A1 offenbart ein Verfahren, durch das ein Betrieb eines Verdichters einer Brennkraftmaschine im Bereich der Pumpgrenze vermieden werden soll. Hierbei ist vorgesehen, das Verhalten des Verdichters mittels eines Luftströmungssensors, der in einem Ansaugtrakt der Brennkraftmaschine angeordnet ist, hinsichtlich eines charakteristischen Schwingungsverhaltens des den Ansaugtrakt durchströmenden Frischgases zu überwachen. Wird auf diese Weise ein kurzfristig drohendes Erreichen der Pumpgrenze ermittelt, wird beispielsweise der Wert für den zu erzielenden Soll-Ladedruck reduziert, wozu eine den Verdichter antreibende Abgasturbine in entsprechend veränderter Weise angeströmt wird, was durch eine Verstellung einer Vorrichtung zur variablen Turbinenanströmung (VTG) bewirkt wird.

Die WO 2013/074503 A1 beschreibt einen Verdichter mit einem Trimmsteller und offenbart zudem, dass mittels eines solchen Trimmstellers die Pumpgrenze im Verdichterkennfeld in Richtung kleinerer Massenströme verschiebbar ist. Beschrieben ist auch, dass Pumpen auftreten kann, wenn der Verbrennungsmotor plötzlich verzögert betrieben wird, beispielsweise infolge einer geschlossenen Drosselklappe während eines Gangwechsels.

Die EP 3 176 440 A1 beschreibt ein Verfahren zur binären Umschaltungen eines Trimmstellers eines Verdichters, wobei für das Verdichterkennfeld des Verdichters eine Grenzwertlinie definiert wird, wobei dann, wenn der Betriebspunkt des Verdichters auf der einen Seite der Grenzwertlinie liegt, eine der beiden Trimmstellungen des Trimmstellers eingestellt ist und die zweite Trimmstellung des Trimmstellers eingestellt wird, wenn der Betriebspunkt des Verdichters auf der anderen Seite der Grenzwertlinie liegt.

Der Erfindung lag die Aufgabe zugrunde, eine mittels eines Verdichters aufgeladene Brennkraftmaschine für ein Kraftfahrzeug zu entwickeln, die sich durch ein möglichst optimales Betriebsverhalten, insbesondere auch hinsichtlich des akustischen Verhaltens während eines Schaltvorgangs, auszeichnet.

Diese Aufgabe wird durch ein Verfahren zum Betreiben eines Kraftfahrzeugs gemäß dem Patentanspruch 1 gelöst. Ein Kraftfahrzeug, bei dem im Betrieb ein solches Verfahren automatisiert durchführbar ist, ist Gegenstand des Patentanspruchs 4. Vorteilhafte Ausführungsformen des erfindungsgemäßen Verfahrens und bevorzugte Ausgestaltungsformen des erfindungsgemäßen Kraftfahrzeugs sind Gegenstände der weiteren Patentansprüche und/oder ergeben sich aus der nachfolgenden Beschreibung der Erfindung.

Der Erfindung liegt der Gedanke zugrunde, bei einer mittels eines Verdichters aufgeladenen Brennkraftmaschine, bei der dem Verdichter ein Trimmsteller zugeordnet ist, um dessen Betriebsverhalten zu verbessern, den Trimmsteller auch aktiv zu nutzen, um ein Kaudern, das bei aufgeladenen Brennkraftmaschinen während eines Schaltvorgangs auftreten kann, zu vermeiden oder zumindest gering zu halten.

Dementsprechend ist ein Verfahren zum Betreiben eines Kraftfahrzeugs mit einer Brennkraftmaschine vorgesehen, wobei die Brennkraftmaschine zumindest einen Verbrennungsmotor, der zumindest temporär über ein Schaltgetriebe und gegebenenfalls eine Kupplung mit angetriebenen Rädern des Kraftfahrzeugs drehantreibend verbunden ist, und weiterhin einen Frischgasstrang umfasst und wobei in den Frischgasstrang ein Verdichter integriert ist, dem ein Trimmsteller zugeordnet ist, durch den ein randseitiger Abschnitt des Eintrittsquerschnitts eines Verdichterlaufrads des Verdichters in veränderlichem Maße abdeckbar ist. Dabei ist der randseitige Abschnitt des Eintrittsquerschnitts in einer Freigabestellung des Trimmstellers geringstmöglich (d.h. so wenig, wie es durch die konstruktive Ausgestaltung maximal möglich ist) und in der Abdeckstellung des Trimmstellers weitestmöglich (d.h. so weitgehend, wie es durch die konstruktive Ausgestaltung maximal möglich ist, wobei diese Maximalstellung als für einen definierten Betrieb des Verdichters optimal ermittelt wurde) abgedeckt. Erfindungsgemäß ist vorgesehen, dass der Trimmsteller für einen Übergang von einem (insbesondere transienten) ersten Betriebszustand der Brennkraftmaschine, bei dem sich das Schaltgetriebe in einer ersten Übersetzungsschaltstellung ("Gang") und der Trimmsteller in der Freigabestellung befindet, zu einem zweiten Betriebszustand der Brennkraftmaschine, bei dem sich das Schaltgetriebe in einer zweiten Übersetzungsschaltstellung ("Gang") befindet, in die Abdeckstellung verstellt wird. Dabei dient die Nummerierung der Übersetzungsschaltstellungen lediglich der allgemeinen Unterscheidung und nicht einer Unterscheidung hinsichtlich des Übersetzungsverhältnisses. Das Übersetzungsverhältnis der ersten Übersetzungsschaltstellung kann demnach größer oder kleiner als das Übersetzungsverhältnis der zweiten Übersetzungsschaltstellung sein.

Erfindungsgemäß wird der Trimmsteller der Brennkraftmaschine demnach in die Abdeckstellung verstellt, wenn infolge eines Schaltvorgangs randseitig des Verdichterlaufrads eine Rückströmung von bereits verdichtetem Frischgas von der Hochdruckseite zu der Niederdruckseite des Verdichters erfolgen kann. Der dann den randseitigen Abschnitt des Eintrittsquerschnitts des Verdichterlaufrads weitestmöglich abdeckende Trimmsteller verhindert oder stört zumindest eine solche Rückströmung beziehungsweise deren weitere Ausbreitung in den stromauf des Trimmstellers gelegenen Abschnitt des Frischgasstrangs, wodurch Schwingungsanregungen, die zu einem Kaudern führen würden, verhindert oder gering gehalten werden können.

Grundsätzlich kann auch vorgesehen sein, dass das erfindungsgemäße Verstellen des Trimmstellers für einen Schaltvorgang beziehungsweise während eines Schaltvorgangs nur dann durchgeführt wird, wenn mit dem Verstellen der Wirkungsgrad des Verdichters verbessert oder um maximal 2% verschlechtert wird.

Ein Kraftfahrzeug, bei dem im Betrieb eine automatisierte Durchführung eines erfindungsgemäßen Verfahrens erfolgen kann, umfasst zumindest eine Brennkraftmaschine, die einen Verbrennungsmotor (insbesondere einen (selbstzündenden und qualitätsgeregelten) Dieselmotor oder einen (fremdgezündeten und quantitätsgeregelten) Ottomotor oder eine Kombination daraus, d.h. z.B. einen Verbrennungsmotor mit homogener Kompressionszündung), der zumindest temporär über ein Schaltgetriebe und gegebenenfalls eine Kupplung mit angetriebenen Rädern des Kraftfahrzeugs drehantreibend verbunden ist, und die weiterhin einen Frischgasstrang aufweist, wobei in den Frischgasstrang ein Verdichter integriert ist und wobei dem Verdichter ein Trimmsteller zugeordnet ist, durch den ein randseitiger Abschnitt des Eintrittsquerschnitts eines Verdichterlaufrads des Verdichters in veränderlichem Maße abdeckbar ist. Dabei ist der randseitige Abschnitt des Eintrittsquerschnitts in einer Freigabestellung des Trimmstellers geringstmöglich (d.h. so wenig, wie es durch die konstruktive Ausgestaltung maximal möglich ist) und in einer Abdeckstellung des Trimmstellers weitestmöglich (d.h. so weitgehend, wie es durch die konstruktive Ausgestaltung maximal möglich ist ("optimale Maximalstellung")) abgedeckt. Weiterhin umfasst eine solche Brennkraftmaschine eine Steuerungsvorrichtung, die zur automatisierten Durchführung eines erfindungsgemäßen Verfahrens eingerichtet ist.

Als "Eintrittsebene" des Verdichterlaufrads wird erfindungsgemäß die bezüglich des Trimmstellers am nächsten gelegene, senkrecht zu der Rotationsachse des Verdichterlaufrads ausgerichtete Ebene verstanden, die von Laufradschaufeln des Verdichterlaufrads definiert wird, indem zumindest ein punktförmiger Abschnitt eines, mehrerer oder aller Eintrittskanten dieser Laufradschaufeln innerhalb dieser Ebene angeordnet ist. Der "Eintrittsquerschnitt" des Verdichterlaufrads ist dann der in dieser Eintrittsebene gelegene Öffnungsquerschnitt des Strömungsraums.

Der Trimmsteller einer erfindungsgemäßen Brennkraftmaschine kann grundsätzlich beliebig, beispielsweise gemäß einer der Ausführungsformen, wie sie in der DE 10 2010 026 176 A1, der EP 3 018 355 A1, der DE 10 2015 209 704 A1, der DE 10 2014 225 716 A1 oder der WO 2014/131790 A1 offenbart sind, ausgestaltet sein.

Gemäß einer bevorzugten Ausgestaltungsform umfasst der Trimmsteller der Brennkraftmaschine eines erfindungsgemäßen Kraftfahrzeugs eine ringförmige Blende. Die Blende kann dabei beispielsweise in Form einer Irisblende, wie sie grundsätzlich auch von Fotoobjektiven bekannt ist, ausgeführt sein. Alternativ kann die Blende auch einen insbesondere ringförmigen Stator und einen insbesondere ringförmigen Rotor umfassen, die in längsaxialer Richtung nebeneinander angeordnet sind, wobei sowohl der Stator als auch der Rotor jeweils mindestens eine Durchgangsöffnung ausbilden, die durch eine Rotation des Rotors relativ zu dem Stator (der dabei ebenfalls bewegt werden kann) in verschiedene Relativpositionen bewegt werden können, in denen diese nicht, teilweise oder vollständig in Überdeckung liegen. Ein Trimmsteller, der lediglich eine solche Blende umfasst, kann sich durch eine relativ einfache konstruktive Ausgestaltung auszeichnen.

Gemäß einer bevorzugten Weiterbildung eines solchen Trimmstellers mit ringförmiger Blende für eine Brennkraftmaschine eines erfindungsgemäßen Kraftfahrzeugs kann vorgesehen sein, dass dieser zusätzlich noch eine Strömungsführungsvorrichtung umfasst, durch die zumindest ein Abschnitt des Frischgasstrangs in einen zentralen Strömungsbereich und einen peripheren Strömungsbereich unterteilt ist, die beide in dem Bereich der Eintrittsebene des Verdichterlaufrads in einen das Verdichterlaufrad aufnehmenden Strömungsraum des Verdichters übergehen, wobei der periphere Strömungsbereich mittels der Blende verschließbar ausgebildet ist. Die Blende kann dabei vorzugsweise an dem stromaufwärts gelegenen Ende des peripheren Strömungsbereichs angeordnet sein. Mittels einer solchen Kombination aus Blende und Strömungsführungsvorrichtung kann, im Vergleich zu einem Trimmsteller, der lediglich eine ringförmige Blende umfasst, die Funktion des Trimmstellers sowohl hinsichtlich der Auswirkungen auf das Verdichterkennfeld als auch hinsichtlich der Unterdrückung eines Kauderns verbessert werden.

Noch weiter verbessern lässt sich die Funktion eines solchen Trimmstellers mit Blende und Strömungsführungsvorrichtung, wenn zumindest ein zu dem Verdichterlaufrad benachbart gelegener Endabschnitt der Strömungsführungsvorrichtung, gegebenenfalls die gesamte Strömungsführungsvorrichtung, längsaxial (d.h. entlang der Rotationsachse des Verdichterlaufrads) verschiebbar ausgebildet ist, wobei der periphere Strömungsbereich in dem Bereich der Eintrittsebene des Verdichterlaufrads in einer Verschlussstellung der Strömungsführungsvorrichtung durch diesen Endabschnitt verschlossen und in einer Öffnungsstellung freigegeben ist.

Gemäß einer bevorzugten Ausführungsform eines erfindungsgemäßen Verfahrens kann vorgesehen sein, dass der Trimmsteller wieder in die Freigabestellung verstellt wird, wenn der Verbrennungsmotor in dem zweiten Betriebszustand mit einer über einem definierten Grenzwert liegenden Last (z.B. definiert durch die je Arbeitsspiel in die Brennräume eingebrachte Kraftstoffmenge oder das von dem Verbrennungsmotor erzeugte Drehmoment oder durch den erreichten Ladedruck oder durch die erreichte Drehzahl des Verdichterlaufrads) betrieben wird. Bevor eine solche Rückverstellung des Trimmstellers jedoch vorgenommen wird, wird vorzugsweise abgewartet beziehungsweise wird der Trimmsteller in der Abdeckstellung belassen, bis die Gefahr eines Kauderns ausreichend gering geworden ist. Hierzu kann insbesondere vorgesehen sein, dass der Trimmsteller erst wieder in die Freigabestellung verstellt wird, sobald der Wert des Massenstroms von Frischgas durch den Verdichter dem (Maximal-)Wert unmittelbar vor dem Übergang entspricht und/oder einen definierten (ausreichenden) Abstand von der Pumpgrenze des Verdichters aufweist. Auch besteht die Möglichkeit, den Trimmsteller für einen definierten Mindestzeitraum in der Abdeckstellung zu belassen.

Wird der Verbrennungsmotor in dem zweiten Betriebszustand dagegen mit höchstens einer dem Grenzwert entsprechenden Last betrieben, ist vorzugsweise vorgesehen, dass der Trimmsteller in der Abdeckstellung belassen wird (solange diese Voraussetzung) gegeben ist.

Der Verdichter der Brennkraftmaschine eines erfindungsgemäßen Kraftfahrzeugs kann insbesondere Teil eines Abgasturboladers sein, der weiterhin eine in den Abgasstrang integrierte Abgasturbine umfasst. Der Antrieb des Verdichters erfolgt dann mittels der Abgasturbine unter Nutzung der Abgasenthalpie. Alternativ oder ergänzend kann der Verdichter auch auf andere Weise, beispielsweise von dem Verbrennungsmotor, d.h. mechanisch, oder mittels eines Elektromotors antreibbar ausgebildet sein.

Bei einem erfindungsgemäßen Kraftfahrzeug kann es sich insbesondere um ein radbasiertes und nicht schienengebundenen Kraftfahrzeug (vorzugsweise ein PKW oder ein LKW) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungs- und Ausgestaltungsbeispielen näher erläutert. In den Zeichnungen zeigt, jeweils in vereinfachter Darstellung:
- Fig. 1:: ein erfindungsgemäßes Kraftfahrzeug;
- Fig. 2:: eine Brennkraftmaschine für ein erfindungsgemäßes Kraftfahrzeug;
- Fig. 3:: einen Längsschnitt durch einen Verdichter für eine erfindungsgemäße Brennkraftmaschine mit einem dazugehörigen Trimmsteller in einer einen Eintrittsquerschnitt eines Laufrads des Verdichter geringstmöglich abdeckenden Stellung;
- Fig. 4:: den Verdichter gemäß der Fig. 3 mit dem Trimmsteller in einer den Eintrittsquerschnitt des Verdichterlaufrads weitestmöglich abdeckenden Stellung;
- Fig. 5:: in insgesamt vier Diagrammen die Verläufe von verschiedenen Kennwerten während eines ersten, beispielhaften Schaltvorgangs im Betrieb eines erfindungsgemäßen Kraftfahrzeugs; und
- Fig. 6:: in insgesamt vier Diagrammen die Verläufe von verschiedenen Kennwerten während eines zweiten, beispielhaften Schaltvorgangs im Betrieb eines erfindungsgemäßen Kraftfahrzeugs.

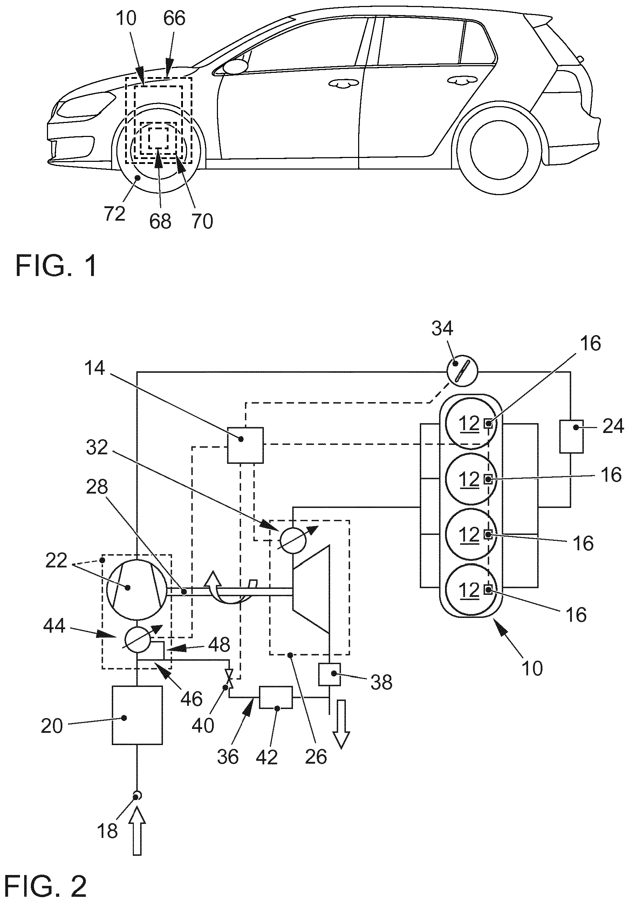

Die Fig. 1 zeigt in vereinfachter Darstellung ein erfindungsgemäßes Kraftfahrzeug mit einer Brennkraftmaschine 66, die einen Verbrennungsmotor 10 umfasst, der über eine Kupplung 68 und ein Schaltgetriebe 70 mit Rädern 72 des Kraftfahrzeugs drehantreibend verbunden beziehungsweise verbindbar ist. Die Brennkraftmaschine 66 kann dabei beispielsweise gemäß derjenigen, wie sie in der Fig. 2 dargestellt ist, ausgebildet sein.

Der Verbrennungsmotor 10 der Brennkraftmaschine 66 gemäß der Fig. 2 bildet eine Mehrzahl von Zylindern 12 aus. Die Zylinder 12 begrenzen gemeinsam mit darin auf und ab geführten Kolben und einem Zylinderkopf (nicht dargestellt) Brennräume, in denen Frischgas gemeinsam mit Kraftstoff verbrannt wird. Der Kraftstoff wird dabei, gesteuert durch eine Steuerungsvorrichtung 14 (Motorsteuerung), mittels Injektoren 16 direkt in die Brennräume eingespritzt. Das Verbrennen der Kraftstoff-Frischgas-Gemischmengen führt zu zyklischen Aufund Ab-Bewegungen der Kolben, die wiederum in bekannter Weise über nicht dargestellte Pleuel auf eine ebenfalls nicht dargestellte Kurbelwelle übertragen werden, wodurch die Kurbelwelle rotierend angetrieben wird.

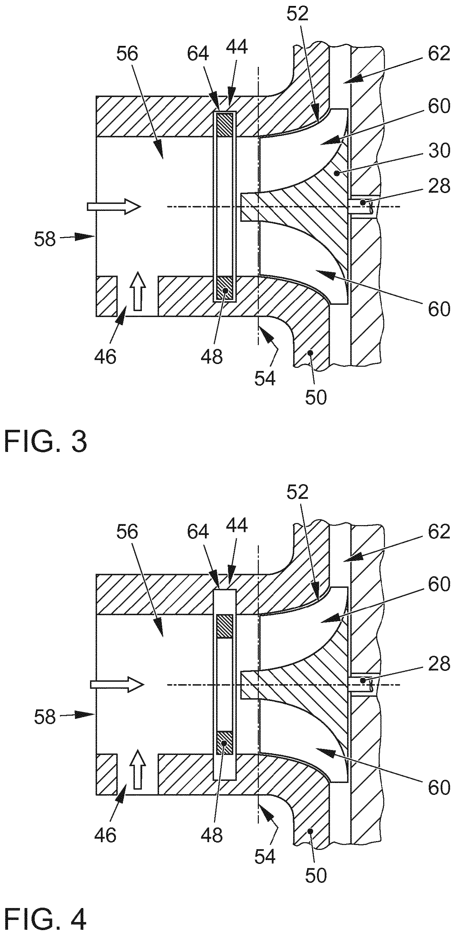

Das Frischgas wird dem Verbrennungsmotor 10 über einen Frischgasstrang zugeführt und dazu über eine Ansaugmündung 18 aus der Umgebung angesaugt, in einem Luftfilter 20 gereinigt und anschließend in einen Verdichter 22, der Teil eines Abgasturboladers ist, geführt. Das Frischgas wird mittels des Verdichters 22 verdichtet, anschließend in einem Ladeluftkühler 24 gekühlt und dann den Brennräumen zugeführt. Der Antrieb des Verdichters 22 erfolgt mittels einer Abgasturbine 26 des Abgasturboladers, die in einen Abgasstrang der Brennkraftmaschine 66 integriert ist. Abgas, das bei der Verbrennung der Kraftstoff-Frischgas-Gemischmengen in den Brennräumen des Verbrennungsmotors 10 entsteht, wird über den Abgasstrang aus dem Verbrennungsmotor 10 abgeführt und durchströmt dabei die Abgasturbine 26. Dies führt in bekannter Weise zu einem rotierenden Antrieb eines Turbinenlaufrads (nicht dargestellt), das über eine Welle 28 drehfest mit einem Verdichterlaufrad 30 (vgl. Fig. 3 und 4) des Verdichters 22 verbunden ist. Der rotierende Antrieb des Turbinenlaufrads wird somit auf das Verdichterlaufrad 30 übertragen.

Um bei einem Betrieb des Verbrennungsmotors 10 mit variierenden Lasten und Drehzahlen eine möglichst optimale Nutzung der Enthalpie des Abgases zur Erzeugung von Verdichtungsleistung mittels des Abgasturboladers zu realisieren, kann die Abgasturbine 26 des Abgasturboladers optional eine mittels der Steuerungsvorrichtung 14 ansteuerbare Vorrichtung zur variablen Turbinenanströmung (VTG) 32 aufweisen. Diese kann in bekannter Weise eine Mehrzahl von in einem Einlasskanal der Abgasturbine 26 angeordneten Leitschaufeln (nicht dargestellt) umfassen, die individuell drehbar ausgebildet sind, wobei diese gemeinsame mittels einer Verstellvorrichtung (nicht dargestellt) verstellbar sind. In Abhängigkeit von den Drehstellungen der Leitschaufeln verengen diese den freien Strömungsquerschnitt in dem Einlasskanal der Abgasturbine 26 mehr oder weniger und beeinflussen zudem den Abschnitt der primären Anströmung des Turbinenlaufrads und die Ausrichtung dieser Anströmung.

Stromab des Verdichters 22 ist in die Ladeluftstrecke, d.h. in den Abschnitt des Frischgasstrangs, der zwischen dem Verdichter 22 und dem Verbrennungsmotor 10 gelegen ist, eine ebenfalls mittels der Steuerungsvorrichtung 14 ansteuerbare Drosselklappe 34 integriert.

Die Brennkraftmaschine 66 kann eine Abgasrückführleitung 36 zur Realisierung einer (Niederdruck-)Abgasrückführung umfassen, bei der Abgas aus einem Abschnitt des Abgasstrangs, der stromab der Abgasturbine 26 und insbesondere auch stromab einer Abgasnachbehandlungsvorrichtung 38, beispielsweise eines Partikelfilters, gelegen ist, abgezweigt und in einen Abschnitt des Frischgasstrangs stromauf des Verdichterlaufrads 30 eingeleitet werden kann. Die Menge des über die Abgasrückführleitung 36 rückzuführenden Abgases kann dabei mittels eines Regelventils 40, das mittels der Steuerungsvorrichtung 14 ansteuerbar ist, gesteuert oder geregelt werden. Weiterhin kann in die Abgasrückführleitung 36 ein Abgaskühler 42 zur Kühlung des darüber geführten Abgases integriert sein.

Dem Verdichter 22 ist ein Trimmsteller 44 zugeordnet, mittels dessen die Anströmung des Verdichterlaufrads 30 durch das Frischgas beeinflusst werden kann. Dazu ist der Trimmsteller 44 beziehungsweise ein dazugehöriger Aktor (nicht dargestellt) mittels der Steuerungsvorrichtung 14 ansteuerbar. Die Abgasrückführleitung 36 kann stromauf beziehungsweise auf der von dem Verdichterlaufrad 30 abgewandten Seite des Trimmstellers 44 in den Frischgasstrang münden. Ein Mündung stromab oder im Bereich des Trimmstellers 44 (und stromauf des Verdichterlaufrads 30) ist ebenfalls möglich.

Die Fig. 3 und 4 zeigen jeweils in einem Längsschnitt eine mögliche Ausgestaltungsform für einen solchen Verdichter 22. Dieser Verdichter 22 kann beispielsweise für eine Brennkraftmaschine 66 gemäß der Fig. 2 vorgesehen sein, wobei dann der Trimmsteller 44 und ein Anschlusskanal 46 für die Abgasrückführleitung 36 integrale Bestandteile des Verdichters 22 sind. Dies ist in der Fig. 2 durch einen gestrichelten Rahmen angedeutet.

Der Verdichter 22 gemäß den Fig. 3 und 4 umfasst ein Gehäuse 50, das ein Teilgehäuse eines Gesamtgehäuses eines Abgasturboladers darstellen kann. Das Gehäuse 50 des Verdichters 22 bildet einen Strömungsraum 52 aus, innerhalb dessen das Verdichterlaufrad 30 drehbar gelagert ist. Einlassseitig weist der Strömungsraum 52 einen in einer Eintrittsebene 54 liegenden Eintrittsquerschnitt auf. Über einen ebenfalls von dem Gehäuse 50 des Verdichters 22 ausgebildeten Einlasskanal 56 kann Frischgas von einem Verdichtereinlass 58 zu dem Verdichterlaufrad 30 geführt werden. Auslassseitig wird der Strömungsraum 52 von einer um Austrittskanten von Laufradschaufeln 60 des Verdichterlaufrads 30 umlaufenden "Austrittsebene" begrenzt. Dort schließt sich ein ebenfalls um die Austrittskanten der Laufradschaufeln 60 umlaufender Diffusorraum 62 und daran anschließend, was in den Fig. 3 und 4 nicht mehr dargestellt ist, eine Verdichtervolute an. Aus der Verdichtervolute geht ein Verdichterauslass (ebenfalls nicht dargestellt) ab.

Innerhalb des Einlasskanals 56 ist der Trimmsteller 44 in einer möglichst kurzen Entfernung zu dem Eintrittsquerschnitt des Verdichterlaufrads 30 angeordnet. Der Trimmsteller 44 umfasst eine Irisblende 48 mit einem grundsätzlich auch von Fotoobjektiven bekannten Aufbau. In einer Abdeckstellung gemäß der Fig. 4 verhindert der Trimmsteller 44 weitestmöglich eine Anströmung des Verdichterlaufrads 30 durch Frischgas, das in Richtung des Verdichterlaufrads 30 strömt, in einem randseitig gelegenen, ringförmigen Bereich des Eintrittsquerschnitts. Der Trimmsteller 44 fokussiert dadurch diese Frischgasströmung auf einen nabennahen Abschnitt des Verdichterlaufrads 30. In einer Freigabestellung gemäß der Fig. 3 kann das Frischgas dagegen über den gesamten Eintrittsquerschnitt in das Verdichterlaufrad 30 einströmen. Die die Irisblende 48 ausbildenden Blendenelemente, die jeweils zum Öffnen oder Schließen der Irisblende 48 um eine Achse verschwenkbar innerhalb des Gehäuses 50 gelagert sind, sind in der Freigabestellung vollständig in einer ringförmigen Vertiefung 64 des Gehäuses 50 angeordnet.

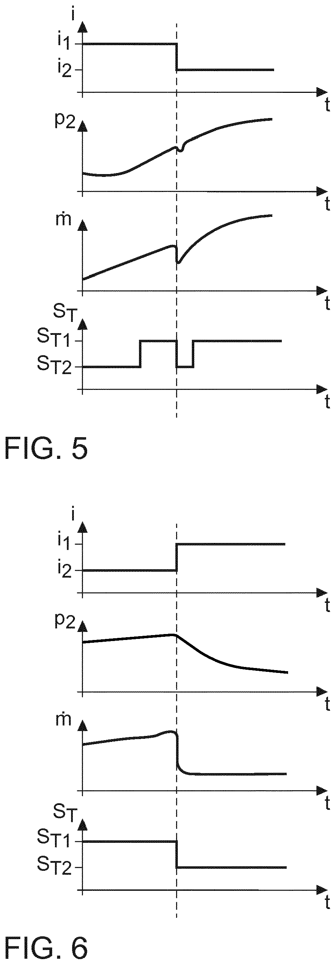

Erfindungsgemäß ist vorgesehen, dass der Trimmsteller 44 für einen Übergang von einem ersten Betriebszustand der Brennkraftmaschine 66, bei dem sich das Schaltgetriebe 70 in einer ersten Übersetzungsschaltstellung i₁ und der Trimmsteller 44 in der Freigabestellung befindet, zu einem zweiten Betriebszustand der Brennkraftmaschine 66, bei dem sich das Schaltgetriebe 70 in einer Übersetzungsschaltstellung i₂ befindet, in die Abdeckstellung verstellt wird. Dadurch soll ein Kaudern infolge einer Rückströmung von verdichtetem Frischgas von der Hochdruckseite des Verdichters zu der Niederdruckseite, das sich wellenförmig in den stromauf des Verdichterlaufrads gelegenen Abschnitt des Frischgasstrangs ausbreiten würde, verhindert werden. Die Fig. 5 und 6 verdeutlichen dieses Vorgehen jeweils anhand von vier Diagrammen, die beispielhaft zeitgleiche Verläufe von verschiedenen Kennwerten während eines Abschnitts im Betrieb der Brennkraftmaschine 66, der einen Schaltvorgang umfasst, aufzeigen.

Dabei zeigt jeweils das oberste Diagramm der Fig. 5 und 6 das Übersetzungsverhältnis i und damit die jeweils anliegende Übersetzungsschaltstellung i₁, i₂ des Schaltgetriebes 70. Das darunter liegende und folglich das obere der beiden mittleren Diagramme zeigt den Verlauf des Ladedrucks p₂ in der Ladeluftstrecke des Frischgasstrangs und damit stromab des Verdichters 22, während das untere der beiden mittleren Diagramme den Massenstrom ṁ des durch den Verdichter 22 geführten Frischgases darstellt. Das jeweils unterste Diagramm der Fig. 5 und 6 zeigt schließlich noch den Öffnungsgrad S_{T} des Trimmstellers 44, wobei der Öffnungsgrad S_{T1} der Freigabestellung entspricht, in der der Eintrittsquerschnitt des Verdichterlaufrads 30 weitestmöglich freigegeben ist, und der Öffnungsgrad S_{T2} der Abdeckstellung entspricht, in der dieser Eintrittsquerschnitt geringstmöglich freigegeben ist.

Die Diagramme der Fig. 5 zeigen einen Betrieb der Brennkraftmaschine 66 während eines Beschleunigungsvorgangs eines von der Brennkraftmaschine 66 angetriebenen Kraftfahrzeugs, bei dem zunächst in einer relativ hohen Übersetzungsschaltstellung i₁, beispielsweise bei einem Betrieb des Verbrennungsmotors 10 unter Volllast, beschleunigt und zwischenzeitlich zur Erzielung einer höheren Antriebsleistung in eine kleinere Übersetzungsschaltstellung i₂ geschaltet wird. Dieser Schaltvorgang führt zu einem temporären Absinken des insgesamt während des betrachteten Abschnitts des Beschleunigungsvorgangs ansteigenden Massenstroms ṁ bei gleichzeitig im Wesentlichen stetig ansteigendem Ladedruck p₂. Dieses Absinken des Massenstroms ṁ ist auf die temporäre Reduzierung der Antriebsleistung für den Verdichter 22 durch die Abgasturbine zurückzuführen, die in der für den Schaltvorgang temporär unterbrochenen oder reduzierten Last im Betrieb des Verbrennungsmotors 10 begründet ist. Während des Schaltvorgangs liegt folglich temporär ein relativ hoher Ladedruck p₂ und damit ein relativ hohes Verdichterdruckverhältnis über dem Verdichter 22 bei gleichzeitig relativ geringem Massenstrom ṁ vor, was zu einem relevanten Rückströmen von verdichtetem Frischgas von der Hochdruckseite zu Niederdruckseite des Verdichters 22 und damit zu der als Kaudern bekannten Geräuschentwicklung führen kann. Um ein solches Kaudern zu vermeiden oder gering zu halten, wird der Trimmsteller 44, der in dem vor dem Schaltvorgang liegenden Abschnitt des Beschleunigungsvorgangs von der Abdeckstellung S_{T2} in die Freigabestellung S_{T1} verstellt wurde, um einen für den Ladedruckaufbau optimalen Betrieb des Verdichters 22 zu gewährleisten, temporär wieder in die Abdeckstellung S_{T2} verstellt. Dadurch blockiert oder minimiert der Trimmsteller 44 eine Ausbreitung der randseitig des Eintrittsquerschnitts des Verdichterlaufrads 30 und damit in dem von dem Trimmsteller 44 in der Abdeckstellung S_{T2} überdeckten Bereich erfolgenden Rückströmung von Frischgas in den stromauf des Trimmstellers 44 liegenden Abschnitt des Frischgasstrangs, so dass Schwingungsanregungen, die zu der als Kaudern bezeichneten Geräuschentwicklung führen können, vermieden oder zumindest gering gehalten werden. Da nach dem Schaltvorgang der Beschleunigungsvorgang in der dann kleineren Übersetzungsschaltstellung i₂ fortgesetzt wird, wird der Trimmsteller 44 wieder in die Freigabestellung verstellt, um einen für den Ladedruckaufbau optimalen Betrieb des Verdichters 22 zu gewährleisten.

Die Diagramme der Fig. 6 zeigen einen Betrieb der Brennkraftmaschine 66 während eines Beschleunigungsvorgangs, beispielsweise mit einem Betrieb des Verbrennungsmotors 10 mit Volllast, in einer relativ kleinen Übersetzungsschaltstellung i₁, dem sich ein Schaltvorgang in eine größere Übersetzungsschaltstellung i₂ anschließt. Daran anschließend wird die Brennkraftmaschine 66 im Wesentlichen stationär für beispielsweise eine Konstantfahrt des von dieser angetriebenen Kraftfahrzeugs in der Ebene betrieben. Zu erkennen ist, dass während des Schaltvorgangs der Massenstrom ṁ deutlich schneller abfällt als der Ladedruck p₂, so dass wiederum Verhältnisse vorliegen, die ein Kaudern begünstigen. Um ein solches Kaudern zu vermeiden oder gering zu halten wird der Trimmsteller 44, der während des Beschleunigungsvorgangs in die Freigabestellung S_{T1} verstellt war, für den Schaltvorgang beziehungsweise während des Schaltvorgangs in die Abdeckstellung S_{T2} verstellt. Da nach dem Schaltvorgang keine weitere Beschleunigung des Kraftfahrzeugs mehr vorgesehen ist, ist in diesem Ausführungsbeispiels der Massenstrom ṁ des durch den Verdichter strömenden Frischgases so gering, dass bei dem gleichzeitig anliegenden Verdichterdruckverhältnis ein Betrieb des Verdichters 22 mit dem Trimmsteller 44 in der Abdeckstellung S_{T2} vorteilhafter für den Verdichterwirkungsgrad ist, so dass nach dem Schaltvorgang kein Zurückstellen in die Freigabestellung S_{T1} vorgesehen ist. Wäre nach dem Schaltvorgang ein weitergehendes Beschleunigen des Kraftfahrzeugs vorgesehen, könnte der Trimmsteller 44 dagegen wieder in die Abdeckstellung S_{T2} verstellt werden, wie dies in dem Ausführungsbeispiel gemäß der Fig. 5 vorgesehen ist.

### BEZUGSZEICHENLISTE

- 10: Verbrennungsmotor
- 12: Zylinder
- 14: Steuerungsvorrichtung
- 16: Injektor
- 18: Ansaugmündung
- 20: Luftfilter
- 22: Verdichter
- 24: Ladeluftkühler
- 26: Abgasturbine
- 28: Welle
- 30: Verdichterlaufrad
- 32: Vorrichtung zur variablen Turbinenanströmung
- 34: Drosselklappe
- 36: Abgasrückführleitung
- 38: Abgasnachbehandlungsvorrichtung
- 40: Regelventil
- 42: Abgaskühler
- 44: Trimmsteller
- 46: Anschlusskanal
- 48: Irisblende
- 50: Gehäuse des Verdichters
- 52: Strömungsraum
- 54: Eintrittsebene des Verdichterlaufrads
- 56: Einlasskanal
- 58: Verdichtereinlass
- 60: Laufradschaufel
- 62: Diffusorraum
- 64: Vertiefung des Gehäuses
- 66: Brennkraftmaschine
- 68: Kupplung
- 70: Schaltgetriebe
- 72: Rad

- i: Übersetzungsverhältnis
- i₁: Übersetzungsverhältnis der ersten Übersetzungsschaltstellung des Schaltgetriebes
- i₂: Übersetzungsverhältnis der zweiten Übersetzungsschaltstellung des Schaltgetriebes
- p₂: Druck in der Ladeluftstrecke
- ṁ: Frischgasmassenstrom
- S_{T}: Öffnungsgrad des Trimmerstellers
- S_{T1}: Öffnungsgrad in der Freigabestellung des Trimmerstellers
- S_{T2}: Öffnungsgrad in der Abdeckstellung des Trimmerstellers
- t: Zeit

## Patentansprüche

1. Verfahren zum Betreiben eines Kraftfahrzeug mit einer Brennkraftmaschine (66), die einen Verbrennungsmotor (10), der über ein Schaltgetriebe (70) mit Rädern (72) des Kraftfahrzeugs drehantreibend verbunden ist, und einen Frischgasstrang umfasst, wobei in den Frischgasstrang ein Verdichter (22) integriert ist und wobei dem Verdichter (22) ein Trimmsteller (44) zugeordnet ist, durch den ein randseitiger Abschnitt des Eintrittsquerschnitts eines Verdichterlaufrads (30) des Verdichters (22) in veränderlichem Maße abdeckbar ist, wobei der randseitige Abschnitt des Eintrittsquerschnitts in einer Freigabestellung (S_{T1}) des Trimmstellers (44) geringstmöglich und in einer Abdeckstellung (S_{T2}) des Trimmstellers (44) weitestmöglich abgedeckt ist, **dadurch gekennzeichnet, dass** der Trimmsteller (44) für einen Übergang von einem ersten Betriebszustand der Brennkraftmaschine (66), bei dem sich das Schaltgetriebe (70) in einer ersten Übersetzungsschaltstellung (i₁) und der Trimmsteller (44) in der Freigabestellung (S_{T1}) befindet, zu einem zweiten Betriebszustand der Brennkraftmaschine (66), bei dem sich das Schaltgetriebe (70) in einer zweiten Übersetzungsschaltstellung (i₂) befindet, in die Abdeckstellung (S_{T2}) verstellt wird.

2. Verfahren gemäß Anspruch 1, **dadurch gekennzeichnet, dass** der Trimmsteller (44)
- wieder in die Freigabestellung (S_{T1}) verstellt wird, wenn der Verbrennungsmotor (10) in dem zweiten Betriebszustand mit einer über einem definierten Grenzwert liegenden Last betrieben wird, oder
- in der Abdeckstellung (S_{T2}) belassen wird, wenn der Verbrennungsmotor (10) in dem zweiten Betriebszustand mit höchsten einer dem Grenzwert entsprechenden Last betrieben wird.

3. Verfahren gemäß Anspruch 2, **dadurch gekennzeichnet, dass** der Trimmsteller (44) wieder in die Freigabestellung (S_{T1}) verstellt wird, sobald der Wert des Massenstroms (ṁ) des Frischgases durch den Verdichter (22) dem Wert unmittelbar vor dem Übergang entspricht und/oder einen definierten Abstand von der Pumpgrenze des Verdichters (22) aufweist.

4. Kraftfahrzeug mit einer Brennkraftmaschine (66), die einen Verbrennungsmotor (10), der über ein Schaltgetriebe (70) mit Rädern (72) des Kraftfahrzeugs drehantreibend verbunden ist, und einen Frischgasstrang umfasst, wobei in den Frischgasstrang ein Verdichter (22) integriert ist und wobei dem Verdichter (22) ein Trimmsteller (44) zugeordnet ist, durch den ein randseitiger Abschnitt des Eintrittsquerschnitts eines Verdichterlaufrads (30) des Verdichters (22) in veränderlichem Maße abdeckbar ist, wobei der randseitige Abschnitt des Eintrittsquerschnitts in einer Freigabestellung (S_{T1}) des Trimmstellers (44) geringstmöglich und in einer Abdeckstellung (S_{T2}) des Trimmstellers (44) weitestmöglich abgedeckt ist, **dadurch gekennzeichnet, dass** das Kraftfahrzeug die Mittel und eine Steuerungsvorrichtung (14) zur automatisierten Durchführung eines Verfahrens gemäß einem der vorhergehenden Ansprüche umfasst.

5. Kraftfahrzeug gemäß Anspruch 4, **dadurch gekennzeichnet, dass** der Trimmsteller (44) eine ringförmige Blende (48) umfasst.

6. Kraftfahrzeug gemäß Anspruch 5, **dadurch gekennzeichnet, dass** der Trimmsteller (44) zusätzlich eine Strömungsführungsvorrichtung umfasst, durch die zumindest ein Abschnitt des Frischgasstrangs in einen zentralen Strömungsbereich und einen peripheren Strömungsbereich unterteilt ist, die beide in dem Bereich der Eintrittsebene (54) des Verdichterlaufrads (30) in einen Strömungsraum (52) des Verdichters (22) übergehen, wobei der periphere Strömungsbereich mittels der Blende (48) verschließbar ausgebildet ist.

7. Kraftfahrzeug gemäß Anspruch 6, **dadurch gekennzeichnet, dass** zumindest ein zu dem Verdichterlaufrad (30) benachbart gelegener Endabschnitt der Strömungsführungsvorrichtung längsaxial verschiebbar ausgebildet ist, wobei der periphere Strömungsbereich in dem Bereich der Eintrittsebene (54) des Verdichterlaufrads (30) in einer Verschlussstellung der Strömungsführungsvorrichtung durch diesen Endabschnitt verschlossen und in einer Öffnungsstellung freigegeben ist.

## Claims

1. Method for operating a motor vehicle having an internal combustion engine (66), which comprises a combustion engine (10), which is connected by a rotary drive via a gearbox (70) to wheels (72) of the motor vehicle, and a fresh-gas tract, wherein a compressor (22) is integrated in the fresh-gas tract, and wherein the compressor (22) is assigned a trim adjuster (44), by means of which an edge-side portion of the inlet cross section of a compressor impeller (30) of the compressor (22) can be covered to a variable extent, wherein the edge-side portion of the inlet cross section is covered to the least possible extent in a release position (S_{T1}) of the trim adjuster (44) and to the greatest possible extent in a covering position (S_{T2}) of the trim adjuster (44), **characterized in that**, for a transfer from a first operating state of the internal combustion engine (66), in which the gearbox (70) is in a first transmission-ratio shift position (i₁) and the trim adjuster (44) is in the release position (S_{T1}), to a second operating state of the internal combustion engine (66), in which the gearbox (70) is in a second transmission-ratio shift position (i₂), the trim adjuster (44) is adjusted into the covering position (S_{T2}).

2. Method according to Claim 1, **characterized in that** the trim adjuster (44)
- is adjusted again into the release position (S_{T1}) if the combustion engine (10) in the second operating state is operated with a load above a defined limit value, or
- is left in the covering position (S_{T2}) if the combustion engine (10) in the second operating state is operated with at maximum a load corresponding to the limit value.

3. Method according to Claim 2, **characterized in that** the trim adjuster (44) is adjusted again into the release position (S_{T1}) as soon as the value of the mass flow (ṁ) of the fresh gas through the compressor (22) corresponds to the value immediately before the transfer and/or is at a defined distance from the pump limit of the compressor (22).

4. Motor vehicle having an internal combustion engine (66), which comprises a combustion engine (10), which is connected by a rotary drive via a gearbox (70) to wheels (72) of the motor vehicle, and a fresh-gas tract, wherein a compressor (22) is integrated in the fresh-gas tract, and wherein the compressor (22) is assigned a trim adjuster (44), by means of which an edge-side portion of the inlet cross section of a compressor impeller (30) of the compressor (22) can be covered to a variable extent, wherein the edge-side portion of the inlet cross section is covered to the least possible extent in a release position (S_{T1}) of the trim adjuster (44) and to the greatest possible extent in a covering position (S_{T2}) of the trim adjuster (44), **characterized in that** the motor vehicle comprises the means and a control device (14) for the automated carrying out of a method according to one of the preceding claims.

5. Motor vehicle according to Claim 4, **characterized in that** the trim adjuster (44) comprises an annular cover (48) .

6. Motor vehicle according to Claim 5, **characterized in that** the trim adjuster (44) additionally comprises a flow-guiding device, by means of which at least one portion of the fresh-gas tract is divided into a central flow region and a peripheral flow region which both merge in the region of the inlet plane (54) of the compressor impeller (30) into a flow chamber (52) of the compressor (22), wherein the peripheral flow region is closable by means of the cover (48).

7. Motor vehicle according to Claim 6, **characterized in that** at least one end portion of the flow-guiding device that is adjacent to the compressor impeller (30) is displaceable longitudinally axially, wherein the peripheral flow region is closed by said end portion in the region of the inlet plane (54) of the compressor impeller (30) in a closure position of the flow-guiding device and is opened up in an open position.

## Revendications

1. Procédé pour faire fonctionner un véhicule automobile avec un moteur à combustion interne (66), qui comprend un moteur à combustion (10), qui est relié par l'intermédiaire d'une boîte de vitesses (70) à des roues (72) du véhicule automobile de manière à les entraîner en rotation, et une ligne de gaz frais, un compresseur (22) étant intégré dans la ligne de gaz frais et un ajusteur de compensation (44) étant associé au compresseur (22), par lequel une section marginale de la section transversale d'entrée d'une roue mobile de compresseur (30) du compresseur (22) peut être recouverte dans une mesure variable, la section marginale de la section transversale d'entrée étant recouverte le moins possible dans une position de dégagement (S_{T1}) de l'ajusteur de compensation (44) et le plus possible dans une position de recouvrement (S_{T2}) de l'ajusteur de compensation (44), **caractérisé en ce que** l'ajusteur de compensation (44) est réglé pour une transition d'un premier état de fonctionnement du moteur à combustion interne (66), dans lequel la boîte de vitesses (70) se trouve dans une première position de changement de rapport (i₁) et l'ajusteur de compensation (44) se trouve dans la position de dégagement (S_{T1}), à un deuxième état de fonctionnement du moteur à combustion interne (66), dans lequel la boîte de vitesses (70) se trouve dans une deuxième position de changement de rapport (i₂), dans la position de recouvrement (S_{T2}).

2. Procédé selon la revendication 1, **caractérisé en ce que** l'ajusteur de compensation (44)
- est de nouveau réglé dans la position de dégagement (S_{T1}) lorsque le moteur à combustion (10) fonctionne dans le deuxième état de fonctionnement avec une charge supérieure à une valeur limite définie, ou
- est laissé dans la position de recouvrement (S_{T2}) lorsque le moteur à combustion (10) fonctionne dans le deuxième état de fonctionnement avec une charge correspondant au plus à la valeur limite.

3. Procédé selon la revendication 2, **caractérisé en ce que** l'ajusteur de compensation (44) est de nouveau réglé dans la position de dégagement (S_{T1}) dès que la valeur du débit massique (ṁ) du gaz frais à travers le compresseur (22) correspond à la valeur immédiatement avant la transition et/ou présente une distance définie de la limite de pompage du compresseur (22).

4. Véhicule automobile avec un moteur à combustion interne (66), qui comprend un moteur à combustion (10), qui est relié par l'intermédiaire d'une boîte de vitesses (70) à des roues (72) du véhicule automobile de manière à les entraîner en rotation, et une ligne de gaz frais, un compresseur (22) étant intégré dans la ligne de gaz frais et un ajusteur de compensation (44) étant associé au compresseur (22), par lequel une section marginale de la section transversale d'entrée d'une roue mobile de compresseur (30) du compresseur (22) peut être recouverte dans une mesure variable, la section marginale de la section transversale d'entrée étant recouverte le moins possible dans une position de dégagement (S_{T1}) de l'ajusteur de compensation (44) et le plus possible dans une position de recouvrement (S_{T2}) de l'ajusteur de compensation (44), **caractérisé en ce que** le véhicule automobile comprend les moyens et un dispositif de commande (14) pour la mise en œuvre automatisée d'un procédé selon l'une quelconque des revendications précédentes.

5. Véhicule automobile selon la revendication 4, **caractérisé en ce que** l'ajusteur de compensation (44) comprend un diaphragme annulaire (48).

6. Véhicule automobile selon la revendication 5, **caractérisé en ce que** l'ajusteur de compensation (44) comprend en outre un dispositif de guidage d'écoulement par lequel au moins une section de la ligne de gaz frais est divisée en une zone d'écoulement centrale et une zone d'écoulement périphérique qui passent toutes deux dans une chambre d'écoulement (52) du compresseur (22) dans la zone du plan d'entrée (54) de la roue mobile de compresseur (30), la zone d'écoulement périphérique étant réalisée de manière à pouvoir être fermée au moyen du diaphragme (48).

7. Véhicule automobile selon la revendication 6, **caractérisé en ce qu'**au moins une section d'extrémité du dispositif de guidage d'écoulement, située au voisinage de la roue mobile de compresseur (30), est réalisée de manière à pouvoir être déplacée axialement dans la direction longitudinale, la zone d'écoulement périphérique étant fermée par cette section d'extrémité dans la zone du plan d'entrée (54) de la roue mobile de compresseur (30) dans une position de fermeture du dispositif de guidage d'écoulement et étant libérée dans une position d'ouverture.
